(19) Europäisches Patentamt
European Patent Office
Office européen des brevets

(11) **EP 3 161 046 B1**

(12) **EUROPÄISCHE PATENTSCHRIFT**

(45) Veröffentlichungstag und Bekanntmachung des Hinweises auf die Patenterteilung:
**25.03.2026   Patentblatt 2026/13**

(21) Anmeldenummer: **15731068.1**

(22) Anmeldetag: **25.06.2015**

(51) Internationale Patentklassifikation (IPC):
**C08J 5/04** (2006.01)     **C08G 18/28** (2006.01)

(52) Gemeinsame Patentklassifikation (CPC):
**C08J 5/043; C08G 18/092; C08G 18/2063; C08G 18/4018; C08G 18/4252; C08G 18/4288; C08G 18/4829; C08G 18/7671; C08J 5/0405; C08J 5/041; C08J 5/042;** C08J 2375/00; F05B 2230/31; F05B 2280/4003; Y02E 10/72

(86) Internationale Anmeldenummer:
**PCT/EP2015/064329**

(87) Internationale Veröffentlichungsnummer:
**WO 2015/197739 (30.12.2015 Gazette 2015/52)**

(54) **VERBUNDBAUTEILE AUF BASIS VON HYDROPHOBEN POLYOLEN**

COMPOSITE COMPONENTS BASED ON HYDROPHOBIC POLYOLS

COMPOSANTS COMPOSITES À BASE DE POLYOLS HYDROPHOBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **26.06.2014   EP 14174523**

(43) Veröffentlichungstag der Anmeldung:
**03.05.2017   Patentblatt 2017/18**

(73) Patentinhaber: **Covestro Deutschland AG**
**51373 Leverkusen (DE)**

(72) Erfinder:
• **LINDNER, Stefan**
  **42857 Remscheid (DE)**
• **LORENZ, Klaus**
  **41539 Dormagen (DE)**

• **SCHÜTZE, Marc**
  **51375 Leverkusen (DE)**
• **HUPKA, Florian**
  **40589 Düsseldorf (DE)**
• **PASSMANN, Dirk**
  **46145 Oberhausen (DE)**
• **NORDMANN, Peter**
  **41539 Dormagen (DE)**

(74) Vertreter: **Levpat**
**c/o Covestro AG**
**Gebäude 4825**
**51365 Leverkusen (DE)**

(56) Entgegenhaltungen:
WO-A1-2012/163845     WO-A1-2014/089210
DE-A1- 102008 027 914     DE-A1- 102009 058 101

**Beschreibung**

Die vorliegende Erfindung betrifft faserverstärkte Verbundbauteile auf Basis einer Polyurethan/Polyisocyanurat-Reaktionsmischung enthaltend hydrophobe Polyole sowie ein Verfahren zu deren Herstellung.

Faserverstärkte Kunststoffe werden als Konstruktionsmaterial verwendet, da diese eine hohe mechanische Festigkeit bei geringem Gewicht aufweisen. Faserverbundwerkstoffe können beispielsweise im Flugzeugbau, im Automobilbau oder in Rotorblättern von Windkraftanlagen eingesetzt werden. Dabei besteht das Matrixmaterial üblicherweise aus ungesättigten Polyesterharzen (UP), Vinylesterharzen (VE) und Epoxidharzen (EP).

Es können die bekannten Verfahren zur Herstellung von Faserverbundbauteilen genutzt werden, wie z.B. Handlaminieren, Spritzpressen, Harzinjektionsverfahren (= Resin Transfer Moulding) oder vakuumunterstützte Infusionsverfahren, beispielsweise VARTM (Vacuum Assisted Resin Transfer Moulding), oder die Prepregtechnologie. Besonders bevorzugt sind vakuumunterstützte Infusionsverfahren, da damit große Bauteile hergestellt werden können, wie beispielweise beschrieben in EP 1 310 351 A1. Mittels solcher Prozesse kann eine schnelle und gleichmäßige Ausbreitung des Harzes erreicht werden. Wichtig ist hierbei, dass die Fasern möglichst vollständig mit dem Harzmaterial getränkt werden und sich dieses nicht vorzeitig verfestigt. Dabei ist es entscheidend, dass das Reaktionsharzgemisch sehr dünnflüssig ist und lange dünnflüssig bleibt, um die Fasern schnell und komplett zu tränken. Auf der anderen Seite sollte die Härtezeit möglichst kurz sein, um die Zykluszeit zu verringern, wodurch die Wirschaftlichkeit des Verfahrens steigt. Aus wirtschaftlichen Gründen ist außerdem eine niedrige Aushärtetemperatur wünschenswert, da sich so Energiekosten sparen lassen. Die fertigen Faserverbundbauteile sollen eine hohe Wärmestabilität aufweisen, da sie beispielsweise durch Sonnenlicht stark erhitzt werden können und dabei ihre mechanische Stabilität nicht verlieren dürfen.

Der Einsatz von Polyurethan(PUR)-Harz oder Polyisocyanurat(PIR)-Harz für die Herstellung von Verbundbauteilen, wie beispielsweise Rotorblättern für die Windenergieindustrie, verspricht einige verfahrenstechnische und werkzeugtechnische Vorteile gegenüber der Verwendung von ungesättigten Polyesterharzen, Vinylesterharzen und Epoxidharzen. Hierzu zählen eine geringere Viskosität des Reaktionsgemisches und bessere Fließeigenschaften der Harze sowie ein verbessertes Ermüdungsverhalten der erhaltenen Komposit-Werkstoffe.

WO 2011/081622 A1 beschreibt Polyurethanzusammensetzungen für Kompositstrukturen. Die Kompositstrukturen können für Rotorblätter von Windkraftanlagen verwendet werden. Das OH/NCO Verhältnis ist mindestens 1, d.h. es gibt mindestens so viele OH-Gruppen wie NCO-Gruppen. Nachteilig an dem in WO 2011/081622 A1 beschriebenen Verfahren sind die hohe Viskosität des Reaktionsgemisches und der kurze Verarbeitungszeitraum, wodurch die Befüllung von großen Bauteilen sehr erschwert wird.

WO 2013/057070 A1 beschreibt Faserverbundbauteile zur Verwendung in Windkraftanlagen, in denen eine Polyurethan/Polyisocyanuratzusammensetzung (PUR/PIR) als Kunststoffmatrix verwendet wird. Das Verhältnis der Anzahl an Isocyanatgruppen zur Anzahl der isocyanatreaktiven Gruppen beträgt vorzugsweise zwischen 1,6 und 6,0. Die WO2014/089210 A1 beschreibt das Verkleben von Faserverbundbauteilen, wohingegen die DE 10 2008 027 914 A1 einen Faserverbundwerkstoff für Rotorblätter offenbart.

Allerdings hat PUR/PIR im Gegensatz zu den üblichen Harzen wie EP oder UP den Nachteil, dass es bei Kontakt mit Wasser zur Schaumbildung kommt. Dies kann zu unerwünschten Gaseinschlüssen oder Fehlstellen im Bauteil führen, auch könnte die Faseranbindung negativ beeinflusst werden. Dies ist problematisch, da die für einen Kompositkern häufig eingesetzten Materialien, wie Balsaholz und dergleichen, häufig Wasser enthalten und somit vor der Verwendung als Kernmaterial getrocknet werden müssen. Dies ist mit einem höheren logistischen Aufwand und Zeit- und Energiekosten für die Trocknung verbunden. Auch führt noch vorhandene Restfeuchtigkeit im Balsaholz oder der Fasern zur Schaumbildung. Dieses Phänomen der Gaseinschlüsse wird bei der Unterstützung der Infusion durch Anlegen von Vakuum noch weiter verstärkt. Vakuum ist aber notwendig, um eingeschlossene Gase vor der Infusion aus dem Lagenaufbau zu entfernen und um die Fasern mit dem Reaktionsharz optimal zu tränken bzw. zu benetzen.

Aufgabe der vorliegenden Erfindung war es daher, ein Matrixmaterial zur Verfügung zu stellen, welches zusammen mit Feuchtigkeit enthaltenden Materialien verwendet werden kann und gleichzeitig eine gute Tränkung und Benetzung der Fasern sowie eine schnelle Aushärtung ermöglicht, ohne dass hierbei die oben genannten Nachteile der aus dem Stand der Technik bekannten Verfahren auftreten. Weiterhin sollten die Verbundbauteile gute mechanische Eigenschaften und eine gute Hitzestabilität aufweisen. Diese Aufgabe konnte überraschenderweise durch Faserverbundbauteile gelöst werden, die aus Faserschichten und einer zu einem Polyurethan/Polyisocyanurat- (PUR/PIR-) Material ausreagierenden Reaktionsmischung, umfassend wenigstens ein hydrophobes Polyol, erhältlich sind.

Gegenstand der Erfindung ist ein Faserverbundbauteil, enthaltend eine Polyurethan/ Polyisocyanurat aufweisende Faserschicht, wobei das Polyurethan/ Polyisocyanurat aus einem Reaktionsgemisch erhältlich ist, umfassend

    A) eine Isocyanatkomponente
    B) eine Polyolkomponente

C) gegebenenfalls Additive,

wobei die Polyolkomponente B) wenigstens ein hydrophobes Polyol enthält, welches ein Polyetheresterpolyol, erhältlich durch basen-katalysierte Umsetzung von Starterverbindungen mit Zerewitinoff-aktiven Wasserstoffatomen mit Alkylenoxiden in Gegenwart von Fettsäureestern, ist und wobei für die Herstellung des Polyetheresterpolyols Fettsäureester eingesetzt werden, deren Fettsäurereste keine freien OH-Gruppen aufweisen.

Ein weiterer Gegenstand der Erfindung ist ein Verfahren zur Herstellung der erfindungsgemäßen Verbundbauteile umfassend folgende Schritte:

a) Bereitstellen eines Schichtaufbaus umfassend einen Kern, ein Fasergewebe, optional eine Fließhilfe,
b) Kontaktieren des Schichtaufbaus mit einem Reaktionsgemisch umfassend

eine Isocyanatkomponente A),
eine Polyolkomponente B),
gegebenenfalls Additive C),

c) Aushärten des Reaktionsgemisches,
wobei die Polyolkomponente B) wenigstens ein hydrophobes Polyol enthält, welches ein Polyetheresterpolyol, erhältlich durch basen-katalysierte Umsetzung von Starterverbindungen mit Zerewitinoff-aktiven Wasserstoffatomen mit Alkylenoxiden in Gegenwart von Fettsäureestern, ist und wobei für die Herstellung des Polyetheresterpolyols Fettsäureester eingesetzt werden, deren Fettsäurereste keine freien OH-Gruppen aufweisen.

Gegenstand der Erfindung ist ebenfalls ein Rotorblatt für Windkraftanlagen umfassend einen Schichtaufbau mit folgenden Schichten:

- einen Kern und eine Polyurethan/Polyisocyanurat aufweisende Faserschicht, gegebenenfalls weitere Schichten,

wobei die Polyurethan/Polyisocyanurat aufweisende Faserschicht unter Verwendung eines hydrophoben Polyols, welches ein Polyetheresterpolyol, erhältlich durch basen-katalysierte Umsetzung von Starterverbindungen mit Zerewitinoff-aktiven Wasserstoffatomen mit Alkylenoxiden in Gegenwart von Fettsäureestern, ist und wobei für die Herstellung des Polyetheresterpolyols Fettsäureester eingesetzt werden, deren Fettsäurereste keine freien OH-Gruppen aufweisen, erhalten wird.

Ein weiterer erfindungsgemäßer Gegenstand ist eine Reaktionsmischung zur Herstellung von Kernverbundbauteilen durch Vakuuminfusion auf Basis einer Polyurethan/Polyisocyanurat-Reaktionsmischung umfassend eine Isocyanatkomponente A) und eine Polyolkomponente B), wobei die Reaktionsmischung ein hydrophobes Polyol, welches ein Polyetheresterpolyol, erhältlich durch basen-katalysierte Umsetzung von Starterverbindungen mit Zerewitinoff-aktiven Wasserstoffatomen mit Alkylenoxiden in Gegenwart von Fettsäureestern, ist und wobei für die Herstellung des Polyetheresterpolyols Fettsäureester eingesetzt werden, deren Fettsäurereste keine freien OH-Gruppen aufweisen, vorzugsweise in einem Anteil von $\geq 10$ bis $\leq 40$ Gew.-%, bezogen auf das Gesamtgewicht der Reaktionsmischung, umfasst.

Ein weiterer Gegenstand der Erfindung ist die Verwendung von Polyetheresterpolyolen, erhältlich durch basen-katalysierte Umsetzung von Starterverbindungen mit Zerewitinoff-aktiven Wasserstoffatomen mit Alkylenoxiden in Gegenwart von Fettsäureestern, wobei für die Herstellung des Polyetheresterpolyols Fettsäureester eingesetzt werden, deren Fettsäurereste keine freien OH-Gruppen aufweisen,zur Herstellung von Polyurethan/Polyisocyanurat-Kompositmaterialien, insbesondere Kernverbundbauteilen.

Als hydrophobe Polyole eignen sich insbesondere fettchemische Polyole, welche durch ihre langen Kohlenwasserstoffketten hydrophob wirken. Es ist hierbei ebenfalls möglich, dass die Polyole eine (Block)struktur mit unterschiedlich hydrophob und hydrophil wirkenden Gruppen besitzen, und sich insgesamt ein hydrophober Charakter des Polyols ergibt. Fettchemische Polyole sind aus tierischen oder pflanzlichen Fetten und Ölen erhältlich. Insbesondere sind hierunter Polyole zu verstehen, die neben Hydroxygruppen auch chemisch eingebundene Fettsäurereste enthalten. Die Hydroxygruppen können beispielsweise Endgruppen von Polyether-, Polyetherester oder Polyesterstrukturen sein, sie können aber auch direkt an die Fettsäurereste gebunden sein, sei es durch Einsatz von beispielsweise Ricinolsäure(derivaten) oder von über chemischem Weg an der Fettsäurekette mit Hydroxygruppen modifizierten Fettsäure(derivate)n.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Das Verbundbauteil hat vorzugsweise einen Schichtaufbau umfassend die PUR/PIR aufweisende Faserschicht sowie weitere optionale Schichten. In einer bevorzugten Ausführungsform umfasst das Verbundbauteil hierbei einen Kern oder eine Distanzmaterialschicht. Der Kern kann auch in Form einer Kernschicht ausgebildet sein oder die Distanzmaterialschicht kann den Kern, aber auch andere Distanzmaterialien, umfassen. Beispielsweise besteht die Distanzmaterialschicht aus Balsaholz, PVC-Schaum, PET-Schaum oder PUR-Schaum. Die Distanzmaterialschicht kann vollflächig oder teilflächig auf der Faserschicht ausgebildet sein. Außerdem kann sie über die Fläche eine unterschiedliche Dicke aufweisen. Bevorzugt sind der Kern bzw. die Distanzmaterialschicht zumindest abschnittsweise direkt an die PUR/PIR aufweisende Faserschicht angrenzend und durch die Anbindung des Kerns an die PUR/PIR aufweisende Faserschicht miteinander fest verbunden. Das erfindungsgemäße Verbundbauteil weist bevorzugt auf einer der beiden Seiten der PUR/PIR enthaltenden Faserschicht eine Distanzmaterialschicht und gegebenenfalls eine zusätzliche, zweite, sich an die Distanzmaterialschicht anschließende, PUR/PIR enthaltende Faserschicht auf, die bevorzugt dasselbe PUR/PIR-Material wie die erstgenannte Faserschicht umfasst.

Es können die bekannten Verfahren zur Herstellung von Faserverbundbauteilen genutzt werden, wie z.B. Handlaminieren, Spritzpressen, Harzinjektionsverfahren (= Resin Transfer Moulding) oder vakuumunterstützte Infusionsverfahren (beispielsweise VARTM (Vacuum Assisted Resin Transfer Moulding)) oder die Prepregtechnologie. Besonders bevorzugt sind vakuumunterstützte Infusionsverfahren.

Bevorzugte Faserverbundbauteile weisen auf der anderen der beiden Seiten der erstgenannten PUR/PIR enthaltenden Faserschicht eine oder mehrere Schutz- und/oder Dekorschichten auf. Bei den Schutzschichten handelt es sich bevorzugt um eine oder mehrere Gelcoatschichten, vorzugsweise aus Polyurethan(PUR)-, Epoxid-, ungesättigten Polyester- oder Vinylesterharzen. Ein bevorzugtes Faserverbundbauteil weist auf der der Gelcoatschicht gegenüberliegenden Seite der PUR/PIR enthaltenden Faserschicht eine Distanzmaterialschicht auf, worauf eine weitere PUR/PIR enthaltende Faserschicht folgt, die bevorzugt dasselbe PUR/PIR-Material wie die erstgenannte Faserschicht umfasst.

Als Fasermaterial können geschlichtete oder ungeschlichtete Fasern, beispielsweise Glasfasern, Kohlefasern, Stahl- bzw. Eisenfasern, Naturfasern, Aramidfasern, Polyethylenfasern oder Basaltfasern eingesetzt werden. Besonders bevorzugt sind Glasfasern. Bevorzugt sind endlosfaserverstärkte Verbundbauteile, die durch den Einsatz von Endlosfasern erhalten werden. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt werden Faser-Halbzeuge als Fasermaterial, wie beispielsweise Gewebe, Gelege, Geflechte, Matten, Vliese, Gestricke und Gewirke oder 3D-Faser-Halbzeuge, eingesetzt.

Der Faseranteil im Verbundbauteil beträgt vorzugsweise mehr als 50 Gew.-%, besonders bevorzugt mehr als 65 Gew.-%, bezogen auf das Gesamtgewicht des Verbundbauteils. Der Faseranteil kann bei Glasfasern beispielsweise durch Veraschung nachträglich bestimmt bzw. vorab über die Einwaage kontrolliert werden. Die Messung des Faservolumenanteils kann gemäß DIN EN Iso 1887 vorgenommen werden.

Das Faserverbundbauteil, vorzugsweise das Glasfaserverbundbauteil, ist bevorzugt durchsichtig oder optisch transparent, damit das Bauteil auf Fehler (z.B. Lufteinschlüsse) optisch untersucht werden kann. Bevorzugt weist das Glasfaserverbundteil eine optische Transparenz gemäß ISO 13468-2 größer 20 %, besonders bevorzugt größer 60 %, ganz besonders bevorzugt größer 80 % auf.

Die erfindungsgemäßen Verbundbauteile können zur Herstellung von Rotorblättern von Windkraftanlagen, zur Herstellung von Karosseriebauteilen von Automobilen oder im Schiffs- oder Flugzeugbau, in Bauteilen des Gebäude- bzw. Straßenbaus und sonstigen hochbelasteten Strukturen verwendet werden.

Vorzugsweise sind die hergestellten Verbundbauteile Teile von Rotorblättern für Windenergieanlagen.

Die Herstellung von Rotorblättern für Windkraftanlagen erfolgt im Allgemeinen in einer Halbschalen-Sandwichbauweise, wobei jeweils eine untere und eine obere Hälfte des Flügels in einem Stück hergestellt werden. Diese beiden Hälften werden, nachdem sie ausgehärtet sind, aufeinander gelegt und verklebt. Die Herstellung des Rotorblatts kann aber auch einteilig erfolgen, wie beispielweise in EP 1 310 351 A1 beschrieben. Zur Verstärkung werden Streben oder Gurte mit eingeklebt. Für das erfindungsgemäße Verfahren können die bekannten Verfahren zur Herstellung von Faserverbundbauteilen genutzt werden. Zur wirtschaftlichen Herstellung von großen Bauteilen wie Rotorblättern für Windkraftanlagen sind vakuumunterstützte Infusionsverfahren besonders bevorzugt. Gemäß einer bevorzugten Ausführungsform wird Schritt b) des erfindungsgemäßen Verfahrens im Vakuuminfusionsverfahren durchgeführt. Hierüber kann im Allgemeinen eine schnelle und gleichmäßige Ausbreitung des Harzes erreicht werden.

Die Geschwindigkeit der Infusion ist generell abhängig von der Durchlässigkeit des Schichtaufbaus und kann weiterhin über die Viskosität der Harzmischung und über den Druckgradienten im Infusionsaufbau beeinflusst werden. Falls erforderlich kann die Infusion durch sogenannte Fließhilfen unterstützt werden (z.B. in Form von druckstabilen, aber harzdurchlässigen Matten), welche auf dem Fasermaterial angeordnet sind und nach der Aushärtung wieder entfernt werden können. Wichtig ist, dass die Fasern möglichst vollständig mit dem Harzmaterial getränkt werden, um zu verhindern, dass sich Gaseinschlüsse oder Mikroporen bilden, welche eine effiziente Spannungsübertragung zwischen Harz und den Fasern verhindern und somit die Stabilität des Bauteils herabsetzen. Weiterhin ist wichtig, dass sich die Oberfläche eines Kerns ausreichend fest mit dem Harz verbindet, damit es bei Belastung nicht zu einer Ablösung der Schichten kommt.

Geeignete Materialien für den Kern sind Holz oder Schaumstoff. Bevorzugt werden erfindungsgemäß als Kernmaterialien (Balsa-)holz, Polyvinylchlorid(PVC)-, Polyester(PET)- oder Polyurethan(PUR)-Schaum eingesetzt. Die Rohdichte von geschäumten Formkörper-Kernen kann in einem Bereich von 20 kg/m³ bis 600 kg/m³, bevorzugt 30 kg/m³ bis 400 kg/m³ und besonders bevorzugt von 50 kg/m³ bis 200 kg/m³ liegen.

Natürliche Kernmaterialien wie z.B. Balsaholz haben einen saisonal und je nach Anbaugebiet stark schwankenden Wassergehalt, daher umfasst die Holzverarbeitung eine Holztrocknung auf die Verwendungsfeuchte des Holzes, welche üblicherweise zwischen 10-15 Gew.-% beträgt, aber insbesondere bei minderer Qualität auch mehr als 20 Gew.-% betragen kann. Es wurde festgestellt, dass es insbesondere bei der Herstellung der Bauteile zu einem Austritt der (Rest-)Feuchte aus dem Kern kommen kann. Dies kann beispielsweise durch den bei einer Vakuuminfusion herrschenden Unterdruck geschehen. Erhöhte Temperaturen, beispielsweise wenn das Harz bei der Infusion oder bei der Aushärtung eine zu hohe Exothermie zeigt, erhöhen die Austrittswahrscheinlichkeit von (Rest-)Feuchte ebenfalls. Hierdurch kann es zur Bildung von Gaseinschlüssen und Fehlstellen zwischen den Schichten kommen. Besonders unvorteilhaft ist dies bei wasserempfindlichen Harzen, wie beispielsweise Polyurethanharzen, da diese zum Aufschäumung neigen, wenn sie mit Wasser in Kontakt kommen. Derartige Fehlstellen im Kontaktbereich zwischen Kern und Harzmaterial sind besonders nachteilig, da es dann zur Delaminierung und teilweisen Freilegung des Kerns kommen kann und die Stabilität und die mechanischen Eigenschaften des Bauteils signifikant herabgesetzt werden.

In einer Ausführungsform der Erfindung weist der Formkörper-Kern einen Wassergehalt von ≥ 0,5 Gewichts-% bis ≤ 30 Gewichts-%, insbesondere von ≥ 4 Gewichts-% bis ≤ 15 Gewichts-% auf. Am einfachsten lässt sich der Wassergehalt gravimetrisch bestimmen: Eine Holzprobe wird entnommen und sofort gewogen. Anschließend wird sie bei einer Temperatur von 103 ± 2 °C in einem möglichst ventilierten Ofen bis zur Gewichtskonstanz getrocknet. Durch die Bestimmung des durch die Trocknung eingetretenen Gewichtsverlustes wird die Wassermenge festgestellt, die ursprünglich im Holzkörper vorhanden war. Das genaue Verfahren ist in der DIN 52183 genormt.

Es wurde gefunden, dass sich durch die anspruchsgemäße Verwendung hydrophober Polyole als Bestandteil der Polyolkomponente einer PUR/PIR-Reaktionsmischung auch bei Verwendung von Feuchtigkeit enthaltenden Kern- oder Fasermaterialien annähernd fehlstellenfreie Verbundbauteile erhalten lassen, welche gleichzeitig sehr gute mechanische Eigenschaften aufweisen. Überraschenderweise kommt es auch bei Verwendung feuchter Materialien, welche direkten Kontakt zu der PUR/PIR-enthaltenden Faserschicht haben, nicht zu einer Blasenbildung oder Delamination der Schichten, sogar wenn diese unter Verfahrensbedingungen hergestellt werden, bei welchen es durch das Anlegen eines Unterdrucks zu einem möglichen Austritt von Feuchtigkeit kommt.

Von Vorteil ist dies insbesondere, wenn große Verbundbauteile über Vakuuminfusionsverfahren hergestellt werden sollen und hierbei Kernmaterialien mit einem natürlichen Wassergehalt (z.B. Balsaholz) eingesetzt werden. Dies ist, beispielsweise bei Rotorblättern für Windkraftanlagen, häufig der Fall. Ohne an eine bestimmte Theorie gebunden sein zu wollen, ist anzunehmen, dass man durch Verwendung des hydrophoben Polyols ein Polyurethan/Polyisocyanurat erhält, welches insgesamt ein vorteilhaft ausgewogenes Hydrophilie/Hydrophobie-Verhalten zeigt: Zwar ist zum einen die Wasseraufnahme in das Polyurethan/Polyisocyanurat reduziert, so dass es nicht zu der unerwünschten Wasser-Isocyanat-Reaktion und in der Folge zur $CO_2$-Bildung kommt; auf der anderen Seite trennen sich die Phasen auch nicht derart vollständig, dass sich im fertigen Bauteil Trübungen und/oder Schlieren bilden, die Fasern unvollständig benetzt werden und sich unbenetzte Stellen im Laminataufbau ergeben könnten, oder dass sich zwischen den Schichten eine wässrige Zwischenphase bilden könnte, was dann zur partiellen oder sogar vollständigen Delamination führen könnte.

Ein Vorteil der erfindungsgemäßen Reaktionsmischung ist, dass die zu verwendenden Kern- bzw. Fasermaterialien mit einem hohen natürlichen Wassergehalt und/oder einem starken Wasserwiederaufnahmevermögen nicht separat getrocknet werden müssen und die erhaltenen Verbundbauteile eine hohe Qualität und vorteilhafte mechanische Eigenschaften aufweisen. Überraschenderweise besitzen die erhaltenen Verbundbauteile außerdem eine besonders hohe Hitzestabilität.

Das erfindungsgemäß eingesetzte hydrophobe Polyol weist ein zahlenmittleres Molekulargewicht von ≥ 150 g/mol, bevorzugt von ≥ 250 g/mol und ≤ 12000 g/mol, besonders bevorzugt von ≥ 300 g/mol und ≤ 6000 g/mol und ganz besonders bevorzugt von ≥ 350 g/mol und ≤ 4500 g/mol auf. Die mittleren Hydroxylfunktionalitäten der hydrophoben Polyole liegen bevorzugt zwischen 2 und 7.

Die zahlenmittlere Molmasse und die Hydroxylfunktionalität (F-OH) sind nach der in Gleichung (1) wiedergegebenen Beziehung über die über Titration, z. B. nach DIN 53240, ermittelbare OH-Zahl miteinander verknüpft.

$$\text{OH-Zahl [mg KOH / g]} = (\text{F-OH} \times 56100 \text{ [mg KOH / mol]}) / (\text{Molmasse [g / mol]}) \qquad (1)$$

Erfindungsgemäß werden als hydrophobe Polyole Polyetheresterpolyole eingesetzt. Unter Polyetheresterpolyolen werden erfindungsgemäß solche Polyole verstanden, deren chemischer Aufbau sowohl Ether- als auch Estergruppen aufweist. Das Polyetheresterpolyol kann neben den vorstehend genannten Strukturelementen prinzipiell sämtliche dem Fachmann bekannte Baueinheiten dieser Substanzklasse aufweisen. Besonders bevorzugt werden Polyetheresterpolyole eingesetzt, welche sich auf Basis von nachwachsenden Rohstoffen, insbesondere fettchemischen Ausgangsstoffen, erhalten lassen. Ganz besonders bevorzugt werden Polyetheresterpolyole auf Basis von Fettsäureestern eingesetzt.

Der Oberbegriff "Fettsäureester" bezeichnet im Folgenden Fettsäureglyceride, insbesondere Fettsäuretriglyceride, und/oder Fettsäureester auf Basis anderer mono- und mehrfunktioneller Alkohole.

Erfindungsgemäß werden Polyetheresterpolyole eingesetzt, die durch basenkatalysierte Umsetzung von Starterverbindungen mit Zerewitinoff-aktiven Wasserstoffatomen mit Alkylenoxiden in Gegenwart von Fettsäureestern erhältlich sind. Hierbei handelt es sich insbesondere um die an sich bekannten Polyetheresterpolyole, wie sie beispielsweise gemäß den Lehren der EP 1923417 A1 und der EP 2177555 A1 in basenkatalysierten Eintopf-Einschrittverfahren erhalten werden können. Es werden zur Herstellung der Polyetheresterpolyole Fettsäureester eingesetzt, deren Fettsäurereste keine freien OH-Gruppen aufweisen.

Unter Starterverbindungen im Sinne der Erfindung werden Verbindungen verstanden, die mindestens ein Zerewitinoff-aktives Wasserstoffatom aufweisen. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert. Typische Beispiele für Verbindungen mit Zerewitinoffaktivem Wasserstoff sind Verbindungen, die Carboxyl-, Hydroxyl-, Amino-, Imino- oder Thiol-Gruppen als funktionelle Gruppen enthalten.

Bevorzugte Starterverbindungen mit Zerewitinoff-aktiven H-Atomen für die Herstellung der Polyetheresterpolyole sind neben hydroxyfunktionellen Startern auch aminofunktionelle Starter. Die Starter weisen meist Funktionalitäten von 2 bis 8 auf, in bestimmten Fällen aber auch Funktionalitäten bis 35. Ihre Molmassen betragen von 17 g/mol bis etwa 1.200 g/mol. Bevorzugte Starter besitzen Funktionalitäten größer oder gleich 3. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Es können auch hochfunktionelle Starterverbindungen auf Basis von hydrierten Stärkehydrolyseprodukten eingesetzt werden. Solche sind beispielsweise in EP-A 1 525 244 beschrieben. Beispiele für aminogruppenhaltige Starterverbindungen sind Ammoniak, Ethanolamin, Diethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte. Außerdem können als Starterverbindungen auch Ringöffnungsprodukte aus cyclischen Carbonsäureanhydriden und Polyolen eingesetzt werden. Beispiele sind Ringöffnungsprodukte aus Phthalsäureanhydrid, Bernsteinsäureanhydrid, Maleinsäureanhydrid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbitol andererseits. Es können natürlich auch Gemische verschiedener Starterverbindungen eingesetzt werden. Besonders bevorzugte Starterverbindungen sind ausgewählt aus der Gruppe bestehend aus Glycerin, Trimethylolpropan, Sorbit und Saccharose.

Geeignete Alkylenoxide sind beispielsweise Ethylenoxid, Propylenoxid, 1,2-Butylenoxid bzw. 2,3-Butylenoxid und Styroloxid. Bevorzugt sind Propylenoxid und Ethylenoxid. Werden die Alkylenoxide nacheinander dosiert, so enthalten die hergestellten Produkte Polyetherketten mit Blockstrukturen. Produkte mit aus Oxyethyleneinheiten bestehenden Endblöcken sind beispielsweise durch erhöhte Konzentrationen an primären Endgruppen gekennzeichnet, welche den Systemen eine erhöhte Isocyanatreaktivität verleihen. Bevorzugte Polyetheresterpolyole haben einen hohen Anteil an Oxypropyleneinheiten. In einer bevorzugten Ausführungsform werden Polyetheresterpolyole auf Basis von Propylenoxid eingesetzt.

Geeignete Fettsäureester sind beispielsweise Baumwollsaatöl, Erdnussöl, Kokosöl, Leinöl, Palmkernöl, Olivenöl, Maisöl, Palmöl, Rapsöl, Sojaöl, Sonnenblumenöl, Jatrophaöl, Heringsöl, Sardinenöl und Talg. Ebenso geeignet sind Fettsäureester anderer mono- oder mehrfunktioneller Alkohole, sowie Fettsäureglyceride mit weniger als 3 Fettsäureresten pro Glycerinmolekül. Die Fettsäure(tri)glyceride und die Fettsäureester anderer mono- und mehrfunktioneller Alkohole können auch im Gemisch eingesetzt werden. Bevorzugt sind Polyetheresterpolyole auf Basis von Fettsäureestern ohne OH-Gruppen in den Fettsäureresten, wie beispielsweise Fettsäureester auf Basis der Laurin- Myristin-, Palmitin-, Stearin-, Palmitolein-, Öl-, Eruca-, Linol-, Linolen-, Elaeostearin oder Arachidonsäure oder deren Gemische. Ganz besonders bevorzugt sind Fettsäuretriglyceride ohne OH-Gruppen in den Fettsäureresten, insbesondere Sojaöl und Rapsöl.

Als Katalysatoren zur Herstellung der Polyetheresterpolyole sind basische Katalysatoren geeignet, beispielsweise (Erd-)Alkalimetallhydroxide, insbesondere Kaliumhydroxid, sowie deren Carbonsäuresalze, weiterhin aliphatische oder aromatische Amine.

In einer bevorzugten Ausführungsform der Erfindung wird ein Polyetheresterpolyol eingesetzt, welches einen Gehalt an Fettsäureresten von 5 bis 85 Gew.-%, bevorzugt 20 bis 60 Gew.-% bezogen auf das Gesamtgewicht des Polyetheresterpolyols aufweist.

Als hydrophobe Polyole werden bevorzugt Polyetheresterpolyole mit einer OH-Zahl von ≥ 28 bis ≤ 900 mg KOH/g, besonders bevorzugt von $\geq 56$ bis $\leq 600$ mg KOH/g und ganz besonders bevorzugt von $\geq 100$ bis $\leq 500$ mg KOH/g eingesetzt. Bevorzugte Polyetheresterpolyole weisen OH-Funktionalitäten von $\geq 1,5$ bis $\leq 6$, besonders bevorzugt von $\geq 1,7$ bis $\leq 5$ und ganz besonders bevorzugt von $\geq 2$ bis $\leq 4$ auf.

Die Berechnung der Funktionalität der aus der EP 1923417 A1 und der EP 2177555 A1 bekannten hydrophoben Polyetheresterpolyole berechnet sich aus der (zahlenmittleren) Funktionalität der Zerewitinoff-aktive Wasserstoffatome enthaltenden Starterverbindung(en) ($F_S$) und der ggf. vorhandenen zahlenmittleren Hydroxyfunktionalität des / der eingesetzten Fettsäureesters / Fettsäureester ($F_F$) gemäß Gleichung (2). Erfindungsgemäß ist $F_F = 0$.

$$(F_S * \text{Mole Starterverbindung} + F_F * \text{mole Fettsäureester}) / (\text{Mole Starter} + \text{Mole Fettsäureester})$$

$$(2)$$

Ein hydrophobes Polyetheresterpolyol erhalten durch basenkatalysierte Umsetzung von 2 mol Sorbit ($F_S = 6$) und 3 mol Sojaöl ($F_F = 0$) und Alkylenoxiden besitzt demnach beispielsweise die Funktionalität 2,4. Entsprechend weist ein auf Basis von 2,14 mol Glycerin, 0,71 mol Sojaöl und Alkylenoxiden hergestelltes hydrophobes Polyetheresterpolyol eine Funktionalität von 2,3 auf. Die Viskositäten der hydrophoben Polyetheresterpolyole können in weiten Grenzen variieren. Sie liegen im Allgemeinen im Bereich von 50 bis 15000 mPas bei 25 °C, bevorzugt im Bereich von 50 bis 7000 mPas bei 25 °C und besonders bevorzugt im Bereich von 80 bis 1500 mPas bei 25 °C. Ganz besonders bevorzugt liegt die Viskosität der erfindungsgemäß einzusetzenden hydrophoben Polyetheresterpolyole im Bereich von 80 bis 600 mPas bei 25 °C.

Als Polyolkomponente B) können erfindungsgemäß auch Mischungen unterschiedlicher hydrophober Polyole eingesetzt werden. Die Polyolkomponente enthält erfindungsgemäß wenigstens ein hydrophobes Polyol und kann darüber hinaus auch weitere Polyolkomponenten enthalten.

Erfindungsgemäß können als weitere Polyole Polyetherpolyole, Polyesterpolyole, Polycarbonatpolyole oder andere, nicht hydrophobe Polyetheresterpolyole eingesetzt werden, bevorzugt sind Polyetherpolyole. Erfindungsgemäß verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid und/oder Butylenoxid an di- oder polyfunktionelle Startermoleküle. Geeignete Starterverbindungen sind in vorangegangenen Abschnitten bereits beschrieben worden. Bevorzugt ist Glycerin als Starter. Die Viskosität der Polyole ist vorzugsweise $\leq 800$ mPas (bei 25°C). Vorzugsweise haben die Polyole mindestens 60 % sekundäre OH-Gruppen, bevorzugt mindestens 80 % sekundäre OH-Gruppen und besonders bevorzugt mindestens 90 % sekundäre OH-Gruppen. Polyetherpolyole auf Basis Propylenoxid sind besonders bevorzugt. Bevorzugt haben die zusätzlich eingesetzten Polyole eine mittlere Funktionalität von 2,0 bis 5,0, besonders bevorzugt 2,5 bis 3,5.

Wird als Komponente B ausschließlich ein hydrophobes Polyol eingesetzt, so ist die OH-Zahl der Komponente B gleich der OH-Zahl des hydrophoben Polyols. Wird als Komponente B ein Gemisch aus mindestens einem hydrophoben Polyol und anderen Polyolen eingesetzt, so ist die OH-Zahl der Komponente B gleich dem Gewichtsmittel der OH-Zahlen der Einzelkomponenten.

Die Polyole B) können auch Fasern, Füllstoffe und Polymere, beispielsweise in feindisperser Form, enthalten.

Der Anteil des hydrophoben Polyols beträgt bevorzugt $\geq 20$ Gew.-%, besonders bevorzugt $\geq 50$ Gew.-% und ganz besonders bevorzugt $\geq 75$ Gew.-% an der Polyolkomponente B). Vorzugsweise beträgt der Anteil des hydrophoben Polyols $\geq 50$ und $\leq 100$ Gew.-%, bevorzugt $\geq 75$ und $\leq 100$ Gew.-% an der Polyolkomponente B).

Die erfindungsgemäße Reaktionsmischung umfasst weiterhin eine Isocyanatkomponente A). Als Isocyanatkomponente A) kommen die üblichen aliphatischen, cycloaliphatischen und insbesondere aromatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebiger Isomerenzusammensetzung, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Neben den vorstehend genannten Polyisocyanaten können anteilig auch modifizierte Polyisocyanate mit Uretdion-, Isocyanurat-, Urethan-, Carbodiimid-, Uretonimin-, Allophanat- oder Biuretstruktur eingesetzt werden. Als Isocyanate werden vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-%, besonders bevorzugt über 32 Gew.-% liegen. Der NCO-Gehalt kann nach DIN 53185 bestimmt werden. Die Viskosität des Isocyanates sollte vorzugsweise $\leq 150$ mPas (bei 25°C), bevorzugt $\leq 50$ mPas (bei 25°C) und besonders bevorzugt $\leq 30$ mPas (bei

25°C) betragen.

Der Anteil des hydrophoben Polyols beträgt bevorzugt $\geq 10$ und $\leq 40$ Gew.-%, besonders bevorzugt $\geq 15$ und $\leq 35$ Gew.-%, an der Reaktionsmischung.

Die erfindungsgemäß eingesetzten Reaktionsmischungen haben niedrige Viskositäten, lange Verarbeitungszeiten und weisen kurze Aushärtezeiten bei niedrigen Aushärtetemperaturen auf und ermöglichen so die schnelle Fertigung von Faserverbundbauteilen.

Ein weiterer Vorteil der erfindungsgemäß eingesetzten Reaktionsharzmischungen ist das verbesserte Verarbeitungsverhalten. Die Reaktionsharzmischungen können bei niedrigen Temperaturen hergestellt und verarbeitet werden. Die Komponenten der Reaktionsharzmischungen können bei 20 bis 50 °C, bevorzugt bei 30 bis 40 °C, gemischt und auf das Fasermaterial aufgetragen werden.

Um eine gute Tränkung der Fasern zu gewährleisten, sollte die Reaktionsharzmischung beim Einfüllen vorzugsweise dünnflüssig sein und möglichst lange dünnflüssig bleiben. Dies ist besonders bei großen Bauteilen nötig, da hier die Füllzeit sehr lang ist, beispielsweise bis zu einer Stunde. Vorzugsweise liegt die Viskosität der erfindungsgemäßen Reaktionsharzmischung bei 25°C direkt nach dem Vermischen zwischen 10 und 300 mPas, bevorzugt zwischen 30 und 100 mPas, besonders bevorzugt zwischen 45 und 85 mPas. Bevorzugt steigt die Viskosität der erfindungsgemäßen Reaktionsharzmischung bei einer konstanten Temperatur von 25°C innerhalb von 60 Minuten nach dem Vermischen der Komponenten nicht über 1000 mPas an, besonders bevorzugt liegt die Viskosität bei einer konstanten Temperatur von 25°C nach 60 Minuten im Bereich von 50 bis 500 mPas, ganz besonders bevorzugt im Bereich von 50 bis 400 mPas. Die Viskosität kann 60 Minuten nach dem Vermischen der Komponenten bei einer konstanten Temperatur von 25 °C mit einem Rotationsviskosimeter bei einer Scherrate von 60/s bestimmt werden.

Die erfindungsgemäß eingesetzte Reaktionsmischung kann auf Gießmaschinen mit Statikmischern oder mit dynamischen Mischern verarbeitet werden, da nur eine kurze Mischzeit benötigt wird. Auch dies stellt einen Wirtschaftlichkeitsvorteil dar.

Im Sinne der Erfindung bezeichnet der Begriff "Polyurethan/Polyisocyanurat-Reaktionsmischung" (PUR/PIR-Reaktionsmischung) eine Reaktionsmischung, welche zu Polyurethan- und/oder Polyisocyanuratstrukturen ausreagiert. Unter PUR/PIR werden solche Polyurethane verstanden, die Urethan-Strukturen und gegebenenfalls Isocyanurat-Strukturen enthalten. Mit NCO-Index, bzw. Kennzahl wird das molare Verhältnis aller im Reaktionssystem vorliegenden NCO-Gruppen zu allen im Reaktionssystem vorliegenden NCO reaktiven Gruppen, also das Zahlenverhältnis der reaktiven Gruppen der Komponenten A) und B) bezeichnet. Der NCO-Index ist dabei vorzugsweise $\geq 0{,}95$, mehr bevorzugt $\geq 1{,}10$ bis $\leq 10{,}00$, noch mehr bevorzugt $\geq 1{,}60$ bis $\leq 6{,}00$.

Das erhaltene PUR/PIR-Material weist vorzugsweise einen PIR-Umsatz von über 20 %, bevorzugt über 40 % und besonders bevorzugt über 60 % auf. Der PIR-Umsatz ist der Anteil an Isocyanatgruppen, der zu PIR-Strukturen reagiert hat. Er kann durch Infrarot-Spektroskopie nachgewiesen werden.

Der PUR/PIR-Reaktionsmischung werden zweckmäßigerweise die in der Polyurethanchemie üblichen Katalysatoren zugesetzt. Vorzugsweise enthält die erfindungsgemäße Reaktionsmischung (= Reaktionsgemisch) Vernetzungskatalysatoren. Es können die dem Fachmann bekannten Vernetzungskatalysatoren eingesetzt werden, wie zum Beispiel tertiäre Amine und organische Metallverbindungen wie Dibutylzinndilaurat.

Besonders bevorzugt sind Katalysatoren, die auch die Trimerisierung katalysieren. Auch hierbei kann es sich um Basen (tertiäre Amine, Salze schwacher Säuren wie Kaliumacetat) und/oder organische Metallverbindungen handeln. Trimerisierungskatalysatoren initiieren und beschleunigen die Trimerisierung von Isocyanatgruppen zu Isocyanuratgruppen.

In einer weiteren Ausführungsform des erfindungsgemäßen Verfahrens umfasst die Polyurethan/Polyisocyanurat-Reaktionsmischung einen thermolatent-reaktiven Trimerisierungskatalysator. Besonders bevorzugt werden latent-reaktive Trimerisierungskatalysatoren eingesetzt, die erst bei 50 bis 100°C beginnen, die Trimerisierung von Isocyanatgruppen zu Isocyanuratgruppen zu initiieren und zu beschleunigen.

Vorzugsweise ist der Trimerisierungskatalysator ein Salz eines tertiären Amins.

Hierbei ist es bevorzugt, dass das tertiäre Amin ausgewählt wird aus der Gruppe bestehend aus Trimethylamin, Triethylamin, Tripropylamin, Tributylamin, Dimethylcyclohexylamin, Dimethylbenzylamin, Dibutylcyclohexylamin, Dimethylethanolamin, Triethanolamin, Diethylethanolamin, Ethyldiethanolamin, Dimethylisopropanolamin, Triisopropanolamin, Triethylenediamin, Tetramethyl-1,3-butandiamin, N,N,N',N'-Tetramethylethylendiamin, N,N,N',N'-Tetramethylhexandiamin-1,6, N,N,N',N',N''-Pentamethyldiethylentriamin, Bis(2-dimethylaminoethoxy)-methan, N,N,N'-Trimethyl-N'-(2-hydroxyethyl)-ethylendiamin, N,N-Dimethyl-N',N'-(2-hydroxyethyl)-ethylendiamin, Tetramethylguanidin, N-Methylpiperidin, N-Ethylpiperidin, N-Methylmorpholin, N-Ethylmorpholin, 1,4-Dimethylpiperidin, 1,2,4-Trimethylpiperidin, N-(2-Dimethylaminoethyl)-morpholin, 1-Methyl-4-(2-dimethylamino)-piperidin, 1,4-Diazabicyclo[2.2.2]oktan, 1,8-Diazabicyclo[5.4.0]undec-7-en und/oder 1,5-diazabicyclo[4.3.0]-5-nonan.

Es ist ebenfalls bevorzugt, dass das Salz ausgewählt wird aus der Gruppe bestehend aus Phenolaten, Ethylhexanoaten, Oleaten, Acetaten und/oder Formiaten.

Überraschenderweise wurde gefunden, dass diese latent-reaktiven Polyurethan(PUR)-Katalysatoren auch die Bildung von Polyisocyanuraten (PIR) bei erhöhter Temperatur katalysieren. Dies ermöglicht die Herstellung von großen Faserverbundbauteilen, da bei der Fülltemperatur die Polyisocyanuratbildung noch nicht auftritt und die mit Fasern gefüllten Formen durch die niedrige Viskosität schnell getränkt werden können und erst bei der späteren Temperung die Aushärtung erfolgt.

Beispiele für kommerziell verfügbare latent-reaktive Trimerisierungskatalysatoren sind das Polycat® SA1/10 (Phenol-blockiertes 1,8-Diazabicyclo[5.4.0]undec-7-en (=DBU)), Polycat® SA 102/10, DABCO® 8154 (Ameisensäure-blockiertes Triethylendiamin) oder DABCO® WT.

Besonders bevorzugt als Trimerisierungskatalysator ist 1,8-Diazabicyclo[5.4.0]undec-7-en, das als Phenolatsalz, Ethylhexanoatsalz, Oleatsalz, Acetatsalz oder Formiatsalz vorliegt.

Besonders bevorzugt ist ein Faserverbundbauteil, welches in der Faserschicht eine Polyurethan/Polyisocya-nuratmatrix aufweist, die aus $\geq 60$ und $\leq 90$ Gew.-%, bevorzugt $\geq 65$ und $\leq 85$ Gew.-% Polyisocyanaten (A), $\geq 10$ und $\leq 40$ Gew.-%, bevorzugt $\geq 15$ und $\leq 35$ Gew.-% Polyolen (B), $\geq 0,01$ und $\leq 2$ Gew.-%, bevorzugt $\geq 0,1$ und $\leq 1$ Gew.-% Trimerisierungskatalysatoren erhalten wurde, wobei die Summe der Gewichtsanteile 100 Gew.-% ergibt.

Hinsichtlich der Reaktionsmischung ist die Kombination eines hydrophoben Polyols, insbesondere eines Polyetheresterpolyols enthaltend Fettsäurereste ohne freie OH-Gruppen, mit einem Glyceringestarteten Polypropylenoxidpolyol mit einer Funktionalität von 3, mit einem latent-reaktiven Trimerisierungskatalysator, insbesondere dem Phenolsalz von 1,8-Diazabicyclo[5.4.0]undec-7-en, sowie MDI bevorzugt.

Die erhaltene Polyurethan/Polyisocyanuratmatrix besitzt vorzugsweise eine Festigkeit im Zugversuch nach DIN EN ISO 527 von über 70 MPa, bevorzugt über 75 MPa, um den hohen mechanischen Beanspruchungen in Bauteilen wie beispielsweise einem Rotorblatt standzuhalten.

Die erhaltene Polyurethan/Polyisocyanuratmatrix weist vorzugsweise einen E-Modul im Zugversuch nach DIN EN ISO 527 von über 2500 MPa, bevorzugt über 2600 MPa auf, um den hohen mechanischen Beanspruchungen in Bauteilen wie beispielsweise einem Rotorblatt standzuhalten.

Die erhaltene Polyurethan/Polyisocyanuratmatrix hat vorzugsweise eine Wärmeformbeständigkeit (HDT) nach DIN EN ISO 75 - 1/75 2004, Methode A mit einer Biegespannung von 1,8 N/mm$^2$, von über 70 °C, bevorzugt über 75°C, besonders bevorzugt über 80 °C, ganz besonders bevorzugt über 90 °C, um den hohen Temperaturbelastungen in Bauteilen standzuhalten.

Die erfindungsgemäßen Faserverbundbauteile können zur Herstellung von Rotorblättern von Windkraftanlagen, zur Herstellung von Karosseriebauteilen von Automobilen oder im Flugzeugbau, in Bauteilen des Gebäude- bzw. Straßenbaus (z.B. Kanaldeckel) und sonstigen hochbelasteten Strukturen verwendet werden.

Die vorliegende Erfindung wird anhand der nachfolgenden Figuren und Beispiele weiter erläutert, ohne jedoch darauf beschränkt zu sein. Es zeigen:

FIG. 1    Trocknungskurven von Balsaholz im Vakuum

FIG. 2    Gewichtszunahmen von getrocknetem Balsaholz durch Luftfeuchtigkeit

FIG. 3    die Temperaturentwicklung im Innern eines Infusionsaufbaues über die Zeit

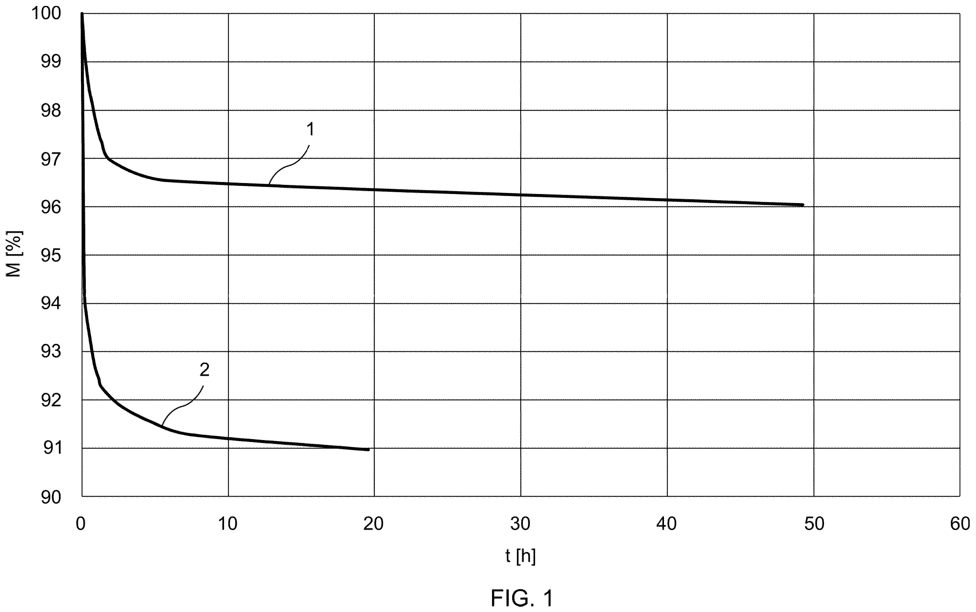

FIG. 1 zeigt die Gewichtsabnahme von Balsaholzproben durch Trocknen im Vakuum. Die Temperatur, bei der die Trocknung durchgeführt wurde, betrug 23 °C. Kurve 1 beschreibt den Verlauf bei 50 mbar Vakuum, Kurve 2 den Verlauf bei 20 mbar Vakuum. In diesen Versuchen wird deutlich, wieviel Wasser Balsaholz enthalten kann.

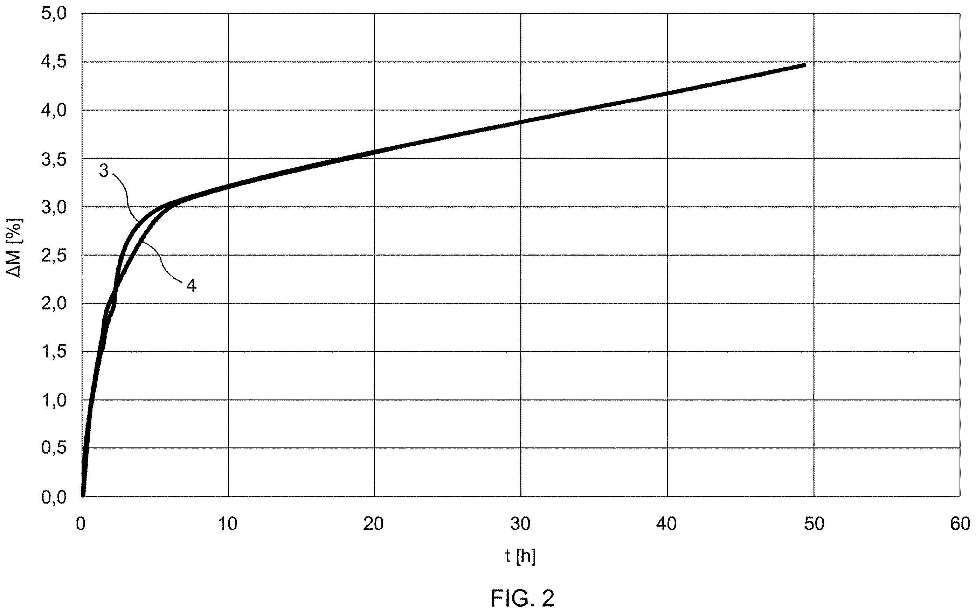

FIG. 2 zeigt die Aufnahme von Feuchtigkeit aus der Luft von zuvor getrockneten Balsaholzproben. Die Kurve 3 betrifft eine zuvor bei 20 mbar getrocknete Probe, die Kurve 4 eine zuvor bei 50 mbar getrocknete Probe. Aus diesen Versuchen erkennt man, dass es nicht ausreicht, Balsaholz-Kerne lediglich einmal zu trocknen, um sie dauerhaft wasserfrei zu erhalten. Sie werden wieder Feuchtigkeit aus der Umgebungsluft aufnehmen.

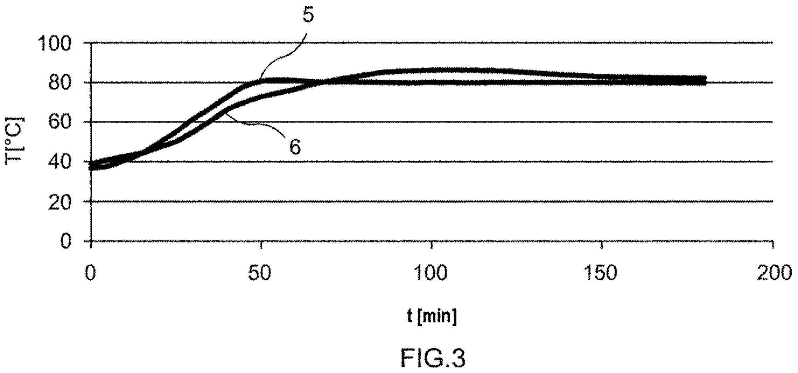

FIG. 3 zeigt die Temperaturentwicklung im Innern eines Infusionsaufbaues über die Zeit. Der Infusionsaufbau wurde nach der Infusion in einen zunächst nicht beheizten Heizschrank positioniert. Der Heizschrank wurde anschließend mit einer Heizrate von 1 °C / min beheizt. Kurve 5 gibt die Ofentemperatur wieder und Kurve 6 die Temperatur des Infusionsaufbaus. Man erkennt, dass die entstehende Exothermie die Temperatur des Aufbaus auf etwas oberhalb von 80 °C ansteigen lässt.

Die Erfindung soll anhand der nachfolgenden Beispiele näher erläutert werden.

## **Beispiele**

Ausgangsverbindungen:

Polyetheresterpolyol 1: Herstellungsvorschrift

197,0 g Glycerin und 7,793 g einer 46,44 Gew.-%igen wässrigen KOH-Lösung wurden in einem 2 l Laborautoklaven bei 110 °C, einer Rührerdrehzahl von 200 U/min. (Kreuzbalkenrührer) und angelegtem Vakuum bei gleichzeitiger Einleitung von 50 ml Stickstoff pro Minute über einen Zeitraum von 3,0 h entwässert. Hierbei stellte sich gegen Ende der Entwässerungszeit ein Druck von 100 - 120 mbar ein. Danach wurde auf 50 °C abgekühlt und es wurden 620,7 g Sojaöl zugegeben. Sauerstoff wurde nach Schließen des Befüllstutzens durch jeweils dreimaliges Befüllen der Apparatur mit 3,0 bar Stickstoff und anschließendes Ablassen des Überdrucks auf Atmosphärendruck entfernt. Nach erneutem Aufheizen auf 110 °C wurden 383 g Propylenoxid über einen Zeitraum von 3,0 h bei einer Rührerdrehzahl von 800 U/min. in den Autoklaven dosiert. Die Dosierung wurde bei einem Druck von 0,05 bar gestartet, gegen Ende der Dosierphase erreichte der Reaktordruck 2,35 bar. Nach einer Nachreaktionszeit von 9 h wurde das Produkt 0,5 h im Vakuum bei 105 °C ausgeheizt, nach Abkühlen auf 40 °C wurden 146,054 g einer 2,161 gew.-%igen wässrigen Schwefelsäurelösung zugegeben und das Gemisch 0,5 h gerührt. Das Produkt wurde sodann bei 40 °C im Wasserstrahlvakuum entwässert und über ein Tiefenfilter (T 750, Fa. Seitz) filtriert. Das Filtrat wurde danach noch 3 h bei 110°C und 1 mbar ausgeheizt. Schließlich wurden bei 80 °C 0,5808 g Irganox® 1076 zugegeben. Die OH-Zahl des Produktes betrug 291 mg KOH/g und die Viskosität bei 25°C 181 mPas.

Polyetherpolyol A: Auf Glycerin gestartetes Polypropylenoxidpolyol mit einer Funktionalität von 3 und einer OH-Zahl von 400 mg KOH/g und einer Viskosität von 375 mPas (bei 25°C).

Polycat® SA 1/10: Produkt der Firma Air Products. Phenolsalz von 1,8-Diazabicyclo[5.4.0]undec-7-en in Dipropylenglykol. Die OH-Zahl betrug 83 mg KOH/g.

Isocyanat: MDI-blend, Gemisch von Diphenylmethan-4,4'-diisocyanat (MDI) mit Isomeren und höherfunktionellen Homologen enthaltend 0,1 Gew.-% Acetylaceton und einem NCO-Gehalt von 32,8 Gew.-%; Viskosität bei 25°C: 20 mPas. Die Mischung enthält ca. 66 Gew.-% Diphenylmethan-4,4'-diisocyanat, 21 Gew.-% Diphenylmethan-2,4'-diisocyanat, 2 Gew.-% Diphenylmethan-2,2'-diisocyanat und 11 Gew.-% höherfunktionelle Homologe von MDI.

Herstellung der Formkörper

Um die Matrixeigenschaften zu bestimmen, wurden Formkörper (Platten) aus verschiedenen PUR/PIR-Systemen hergestellt und verglichen. Die Polyolmischungen, enthaltend den Trimerisierungskatalysator, wurden bei einem Druck von 1 mbar für 60 Minuten entgast und danach mit dem Isocyanat versetzt. Diese Abmischung wurde für ca. 5 Minuten bei einem Druck von 1 mbar entgast und danach in Plattenformen gegossen. Die Platten wurden bei Raumtemperatur gegossen und über Nacht in einem auf 80 °C geheizten Trockenschrank getempert. Die Dicke der Platten betrug 4 mm. Man erhielt optisch transparente Platten. Die Mengenangaben und Eigenschaften sind der Tabelle 1 zu entnehmen.

Aus den Platten wurden Probenkörper für einen Zugversuch nach DIN EN ISO 527 hergestellt und der E-Modul und die Festigkeit bestimmt.

Die Wärmeformbeständigkeit (Heat Deflection Temperature - HDT) wurde nach DIN EN ISO 75 1/75 2004 - Methode A mit einer Biegespannung von 1,8 N/mm$^2$ und einer Aufheizrate von 120 K/h bestimmt.

OH-Zahl und Viskosität: Die Bestimmung der OH-Zahl erfolgte gemäß der Vorschrift der DIN 53240. Die Viskosität wurde mittels Rotationsviskosimeter (Physica MCR 51, Hersteller: Anton Paar) nach der Vorschrift der DIN 53019 ermittelt (Spindeltyp CC27, Scherratenbereich 16-128 1/s).

Die Viskosität des Reaktionsgemisches wurde direkt nach dem Vermischen und 60 Minuten nach dem Vermischen der Komponenten bei einer konstanten Temperatur von 25 °C mit einem Rotationsviskosimeter bei einer Scherrate von 60 /s bestimmt.

Alle Mengenangaben in den folgenden Tabellen erfolgen in Gewichtsteilen.

Tabelle 1:

| | Beispiel 1 | Beispiel 2 | Beispiel 3 | Vergleichsbeispiel 4 | Vergleichsbeispiel 5 | Vergleichsbeispiel 6 |
|---|---|---|---|---|---|---|
| Polyetheresterpolyol 1 | 26 | 13 | 19,5 | - | - | - |
| Polyetherpolyol A | | 13 | 6,5 | 26 | 26 | 26 |
| Polycat SA 1/10 | 0,5 | 0,5 | 0,5 | 0,5 | 0,5 | 0,5 |
| Isocyanat | 73,5 | 73,5 | 73,5 | 83,4 | 100,8 | 73,5 |
| NCO-Index | 5,81 | 3,57 | 3,87 | 3,50 | 4,23 | 3,08 |

(fortgesetzt)

| | Beispiel 1 | Beispiel 2 | Beispiel 3 | Vergleichsbeispiel 4 | Vergleichsbeispiel 5 | Vergleichsbeispiel 6 |
|---|---|---|---|---|---|---|
| *Eigenschaften* | | | | | | |
| HDT [°C] | 111,1 | 96,1 | 87,8 | 76,5 | 73,1 | 73,1 |
| Viskosität direkt nach dem Vermischen bei 25°C [mPas] | 80 | 55 | 52 | 47 | 44 | 58 |
| Viskosität 60 min. nach dem Vermischen bei 25°C [mPas] | 391 | 253 | 237 | 274 | 255 | 441 |
| Zugversuch: E-Modul [MPa] | 2609 | 2820 | 2686 | 3140 | 2949 | 3117 |
| Zugversuch: Festigkeit [MPa] | 75 | 78,4 | 74,4 | 40,7 | 47,5 | 76 |
| Zugversuch: Bruchdehnung [%] | 5,8 | 5,0 | 5,7 | 1,4 | 1,8 | 4,6 |

Die erfindungsgemäßen Beispiele in Tabelle 1 zeigen einen langsamen Viskositätsanstieg, was für die Herstellung von großen Bauteilen vorteilhaft ist, da dies als Maß für einen langen Verarbeitungszeitraum gilt. Es wurden kompakte und optisch transparente Bauteile erhalten mit guten mechanischen Eigenschaften wie einem E-Modul von über 2600 MPa, einer Festigkeit von über 74 MPa und einer Bruchdehnung von über 5 %. Überraschenderweise weisen die gemäß der Beispiele 1 bis 3 hergestellten Formkörper trotz einer niedrigeren OH-Zahl der eingesetzten Polyole / Polyolmischungen deutlich höhere Wärmeformbeständigkeiten (HDT-Werte) als der nach Vergleichsbeispiele 4 bis 6 hergestellten Probekörper auf.

Mit den Zusammensetzungen gemäß Beispiel 1und Vergleichsbeispiel 4 wurden glasfaserverstärkte PUR/PIR-Werkstoffe durch das Vakuuminfusionsverfahren hergestellt.

Dazu wurden zwei Lagen eines UD-Glasgeleges (Glasflächengewicht 1040 g/m$^2$ je Lage), dann ein Stück Balsaholz (getrocknet unter Vakuum bei 105°C über Nacht), wieder zwei Lagen eines UD-Glasgeleges (Glasflächengewicht 1040 g/m$^2$ je Lage) und ein sogenanntes Green Mesh als Fließhilfe auf ein Werkzeug gegeben, mit einer Vakuumfolie abgedichtet und evakuiert. Dann wurde die Zusammensetzung aus Beispiel 1, die vorab für ca. 5 Minuten entgast wurde, eingesogen. Nachdem die Form gefüllt war, wurde das Bauteil bei 80 °C über Nacht getempert.

Es wurde ein kompaktes und optisch transparentes Bauteil erhalten.

Tabelle 2 zeigt, dass die Blasenbildung, die durch die Reaktion von Feuchtigkeit mit dem Isocyanat entstehen kann, bei einem Versuch mit der Zusammensetzung aus Beispiel 1 geringer ist als bei einem Versuch mit der Zusammensetzung aus Vergleichsbeispiel 6 bei gleichen Verarbeitungsbedingungen.

Tabelle 2:

| | Beispiel 7 | Vergleichsbeispiel 8 |
|---|---|---|
| Polyetherester 1 | 26 | - |
| Polyetherpolyol A | - | 26 |
| Polycat SA 1/10 | 0,5 | 0,5 |
| MDI-blend | 73,5 | 73,5 |
| Optischer Eindruck | wenig Blasenbildung | Blasenbildung |

Die einfache Zugabe von unterschiedlichen Anteilen an Sojaöl zur Polyolkomponenente führt zu Phasenseparation in der Polyolformulierung (siehe Tabelle 3). Solchermaßen hydrophobisierte Polyole sind daher für die Verwendung als Reaktionsgemisch für VARTM ungeeignet.

Tabelle 3:

|  | Vergleichsbeispiel 9 | Vergleichsbeispiel 10 | Vergleichsbeispiel 11 | Vergleichsbeispiel 12 |
|---|---|---|---|---|
| Polyetherpolyol A | 30 | 20 | 40 | 55 |
| Sojaöl | 30 | 40 | 20 | 5 |
| Phasenstabilität | nein | nein | nein | nein |

**Patentansprüche**

1. Faserverbundbauteil, enthaltend eine Polyurethan/Polyisocyanurat aufweisende Faserschicht, gegebenenfalls einen Kern sowie weitere Schichten, wobei das Polyurethan/Polyisocyanurat aus einem Reaktionsgemisch erhältlich ist, umfassend

    eine Isocyanatkomponente A)
    eine Polyolkomponente B)
    gegebenenfalls Additive C),

    **dadurch gekennzeichnet, dass**
    die Polyolkomponente B) wenigstens ein hydrophobes Polyol enthält, welches ein Polyetheresterpolyol, erhältlich durch basen-katalysierte Umsetzung von Starterverbindungen mit Zerewitinoff-aktiven Wasserstoffatomen mit Alkylenoxiden in Gegenwart von Fettsäureestern, ist und wobei für die Herstellung des Polyetheresterpolyols Fettsäureester eingesetzt werden, deren Fettsäurereste keine freien OH-Gruppen aufweisen.

2. Faserverbundbauteil gemäß Anspruch 1, wobei das Polyetheresterpolyol einen Gehalt an Fettsäureresten von 5 bis 85 Gew.-% bezogen auf das Gesamtgewicht des Polyetheresterpolyols aufweist.

3. Verfahren zur Herstellung von Verbundbauteilen umfassend folgende Schritte

    a) Bereitstellen eines Schichtaufbaus umfassend einen Kern, ein Fasergewebe, optional eine Fließhilfe,
    b) Kontaktieren des Schichtaufbaus mit einem Reaktionsgemisch umfassend

    eine Isocyanatkomponente A),
    eine Polyolkomponente B),
    gegebenenfalls Additive C),

    c) Aushärten des Reaktionsgemisches

    **dadurch gekennzeichnet, dass**
    die Polyolkomponente wenigstens ein hydrophobes Polyol enthält, welches ein Polyetheresterpolyol, erhältlich durch basen-katalysierte Umsetzung von Starterverbindungen mit Zerewitinoff-aktiven Wasserstoffatomen mit Alkylenoxiden in Gegenwart von Fettsäureestern, ist und wobei für die Herstellung des Polyetheresterpolyols Fettsäureester eingesetzt werden, deren Fettsäurereste keine freien OH-Gruppen aufweisen.

4. Verfahren zur Herstellung von Verbundbauteilen gemäß Anspruch 3, wobei das Reaktionsgemisch bei einer konstanten Temperatur von 25 °C 60 Minuten nach dem Vermischen eine Viskosität von 50 bis 500 mPas aufweist.

5. Verfahren zur Herstellung von Verbundbauteilen gemäß einem der Ansprüche 3 oder 4, wobei der NCO-Index von $\geq$ 1,10 bis $\leq$ 10,00 beträgt.

6. Verfahren zur Herstellung von Verbundbauteilen gemäß einem der Ansprüche 3 bis 5, wobei der Kern zumindest abschnittsweise direkt an die Polyurethan/Polyisocyanurat aufweisende Faserschicht angrenzt und ganz oder teilweise aus einem Kernmaterial ausgewählt aus der Gruppe bestehend aus Holz, Polyvinylchlorid (PVC)-, Polyester (PET)- oder Polyurethan (PUR)-Schaum besteht und einen Wassergehalt von $\geq$ 0,5 Gew.-% bis $\leq$ 30 Gew.-% aufweist.

7. Verfahren zur Herstellung von Verbundbauteilen gemäß einem oder mehreren der Ansprüche 3 bis 6, wobei Schritt b) im Vakuuminfusionsverfahren durchgeführt wird.

8. Reaktionsmischung zur Herstellung von Kernverbundbauteilen durch Vakuuminfusion auf Basis einer Polyurethan/-Polyisocyanurat-Reaktionsmischung umfassend eine Isocyanatkomponente A) und eine Polyolkomponente B), **dadurch gekennzeichnet, dass**

   die Reaktionsmischung ein hydrophobes Polyol, welches ein Polyetheresterpolyol, erhältlich durch basen-katalysierte Umsetzung von Starterverbindungen mit Zerewitinoff-aktiven Wasserstoffatomen mit Alkylenoxiden in Gegenwart von Fettsäureestern, ist und wobei für die Herstellung des Polyetheresterpolyols Fettsäureester eingesetzt werden, deren Fettsäurereste keine freien OH-Gruppen aufweisen,
   in einem Anteil von ≥ 10 bis ≤ 40 % Gew.-%, bezogen auf das Gesamtgewicht der Reaktionsmischung, umfasst.

9. Verwendung von hydrophoben Polyetheresterpolyolen, erhältlich durch basen-katalysierte Umsetzung von Starterverbindungen mit Zerewitinoff-aktiven Wasserstoffatomen mit Alkylenoxiden in Gegenwart von Fettsäureestern, wobei für die Herstellung des Polyetheresterpolyols Fettsäureester eingesetzt werden, deren Fettsäurereste keine freien OH-Gruppen aufweisen,
   zur Herstellung von Polyurethan/Polyisocyanurat-Kompositmaterialien, insbesondere Kernverbundbauteilen.

10. Rotorblatt für Windkraftanlagen umfassend einen Schichtaufbau mit folgenden Schichten:

    - einen Kern und eine Polyurethan/Polyisocyanurat aufweisende Faserschicht, gegebenenfalls weitere Schichten,

    **dadurch gekennzeichnet, dass**
    die Polyurethan/Polyisocyanurat aufweisende Faserschicht unter Verwendung eines hydrophoben Polyols erhalten wird, welches ein Polyetheresterpolyol, erhältlich durch basenkatalysierte Umsetzung von Starterverbindungen mit Zerewitinoff-aktiven Wasserstoffatomen mit Alkylenoxiden in Gegenwart von Fettsäureestern, ist, wobei für die Herstellung des Polyetheresterpolyols Fettsäureester eingesetzt werden, deren Fettsäurereste keine freien OH-Gruppen aufweisen.

## Claims

1. Fibre composite component comprising a fibre layer including polyurethane/polyisocyanurate, optionally a core and further layers, the polyurethane/polyisocyanurate being obtainable from a reaction mixture comprising

   an isocyanate component A)
   a polyol component B)
   optionally additives C),
   **characterized in that**
   the polyol component B) comprises at least one hydrophobic polyol which is a polyether ester polyol obtainable by base-catalysed reaction of starter compounds having Zerewitinoff-active hydrogen atoms with alkylene oxides in the presence of fatty acid esters, and wherein fatty acid esters having no free OH groups in the fatty acid residues thereof are used for the preparation of the polyether ester polyol.

2. Fibre composite component according to Claim 1, wherein the polyether ester polyol has a content of fatty acid residues of 5% to 85% by weight, based on the total weight of the polyether ester polyol.

3. Method for producing composite components, comprising the following steps:

   a) providing a laminar structure comprising a core, a fibre fabric, optionally a flow aid,
   b) contacting the laminar structure with a reaction mixture comprising

      an isocyanate component A),
      a polyol component B),
      optionally additives C),

   c) curing the reaction mixture,

**characterized in that**
the polyol component comprises at least one hydrophobic polyol which is a polyether ester polyol obtainable by base-catalysed reaction of starter compounds having Zerewitinoff-active hydrogen atoms with alkylene oxides in the presence of fatty acid esters, and wherein fatty acid esters having no free OH groups in the fatty acid residues thereof are used for the preparation of the polyether ester polyol.

4. Method for producing composite components according to Claim 3, wherein the reaction mixture at a constant temperature of 25°C, 60 minutes after mixing, has a viscosity of 50 to 500 mPas.

5. Method for producing composite components according to either of Claims 3 and 4, wherein the NCO index is from $\geq$ 1.10 to $\leq$ 10.00.

6. Method for producing composite components according to any of Claims 3 to 5, wherein the core, at least in sections, directly adjoins the fibre layer including polyurethane/polyisocyanurate and consists wholly or partly of a core material selected from the group consisting of wood, polyvinyl chloride (PVC) foam, polyester (PET) foam and polyurethane (PUR) foam and has a water content of $\geq$ 0.5% by weight to $\leq$ 30% by weight.

7. Method for producing composite components according to one or more of Claims 3 to 6, wherein step b) is conducted by a vacuum infusion method.

8. Reaction mixture for production of core composite components by vacuum infusion, based on a polyurethane/polyisocyanurate reaction mixture comprising an isocyanate component A) and a polyol component B),
**characterized in that**
the reaction mixture comprises a hydrophobic polyol which is a polyether ester polyol obtainable by base-catalysed reaction of starter compounds having Zerewitinoff-active hydrogen atoms with alkylene oxides in the presence of fatty acid esters, and wherein fatty acid esters having no free OH groups in the fatty acid residues thereof are used for the preparation of the polyether ester polyol, in a proportion of $\geq$ 10% to $\leq$ 40% by weight, based on the total weight of the reaction mixture.

9. Use of hydrophobic polyether ester polyols obtainable by base-catalysed reaction of starter compounds having Zerewitinoff-active hydrogen atoms with alkylene oxides in the presence of fatty acid esters, wherein fatty acid esters having no free OH groups in the fatty acid residues thereof are used for the preparation of the polyether ester polyol, for production of polyurethane/polyisocyanurate composite materials, especially core composite components.

10. Rotor blade for wind turbines comprising a laminar structure having the following layers:

- a core and a fibre layer including polyurethane/polyisocyanurate, optionally further layers,

**characterized in that**
the fibre layer including polyurethane/polyisocyanurate is obtained using a hydrophobic polyol which is a polyether ester polyol obtainable by base-catalysed reaction of starter compounds having Zerewitinoff-active hydrogen atoms with alkylene oxides in the presence of fatty acid esters, wherein fatty acid esters having no free OH groups in the fatty acid residues thereof are used for the preparation of the polyether ester polyol.

**Revendications**

1. Composant composite fibreux, contenant une couche fibreuse présentant du polyuréthane/polyisocyanurate, le cas échéant un noyau ainsi que d'autres couches, le polyuréthane/polyisocyanurate pouvant être obtenu à partir d'un mélange réactionnel comprenant un composant isocyanate A)

un composant polyol B)
le cas échéant des additifs C)
**caractérisé en ce que**
le composant polyol B) contient au moins un polyol hydrophobe, qui est un polyétheresterpolyol pouvant être obtenu par transformation, catalysée par une base, de composés de départ présentant des atomes d'hydrogène actifs selon Zerewitinoff avec des oxydes alkylène en présence d'esters d'acides gras et dans laquelle on utilise, pour la préparation du polyétheresterpolyol, des esters d'acides gras dont les radicaux acide gras ne présentent pas de groupes OH libres.

2. Composant composite fibreux selon la revendication 1, le polyétheresterpolyol présentant une teneur en radicaux acide gras de 5 à 85% en poids, par rapport au poids total du polyétheresterpolyol.

3. Procédé de fabrication de composants composites comprenant les étapes suivantes

   a) mise à disposition d'une structure stratifiée comprenant un noyau, un tissu fibreux, éventuellement un adjuvant d'écoulement,
   b) mise en contact de la structure stratifiée avec un mélange réactionnel comprenant

   un composant isocyanate A),
   un composant polyol B),
   le cas échéant des additifs C)

   c) durcissement du mélange réactionnel

   **caractérisé en ce que**
   le composant polyol contient au moins un polyol hydrophobe, qui est un polyétheresterpolyol pouvant être obtenu par transformation, catalysée par une base, de composés de départ présentant des atomes d'hydrogène actifs selon Zerewitinoff avec des oxydes alkylène en présence d'esters d'acides gras et dans laquelle on utilise, pour la préparation du polyétheresterpolyol, des esters d'acides gras dont les radicaux acide gras ne présentent pas de groupes OH libres.

4. Procédé de fabrication de composants composites selon la revendication 3, le mélange réactionnel présentant, à une température constante de 25°C, 60 minutes après le mélange, une viscosité de 50 à 500 mPa.s.

5. Procédé de fabrication de composants composites selon l'une des revendications 3 ou 4, l'indice NCO étant de $\geq 1,10$ à $\leq 10,00$.

6. Procédé de fabrication de composants composites selon l'une des revendications 3 à 5, le noyau étant directement adjacent, au moins par sections, à la couche fibreuse présentant du polyuréthane/polyisocyanurate et étant constitué totalement ou partiellement d'un matériau de noyau choisi dans le groupe constitué par le bois, la mousse de poly(chlorure de vinyle) (PVC), de polyester (PET) ou de polyuréthane (PUR) et présentant une teneur en eau de $\geq$ 0,5% en poids à $\leq$ 30% en poids.

7. Procédé de fabrication de composants composites selon l'une ou plusieurs des revendications 3 à 6, l'étape b) étant réalisée dans un procédé d'infusion sous vide.

8. Mélange réactionnel pour la fabrication de composants composites à noyau par infusion sous vide sur la base d'un mélange réactionnel de polyuréthane/polyisocyanurate comprenant un composant isocyanate A) et un composant polyol B),
   **caractérisé en ce que**

   le mélange réactionnel comprend un polyol hydrophobe, qui est un polyétheresterpolyol pouvant être obtenu par transformation, catalysée par une base, de composés de départ présentant des atomes d'hydrogène actifs selon Zerewitinoff avec des oxydes alkylène en présence d'esters d'acides gras et dans laquelle on utilise, pour la préparation du polyétheresterpolyol, des esters d'acides gras dont les radicaux acide gras ne présentent pas de groupes OH libres.
   dans une proportion de $\geq$ 10 à $\leq$ 40 % en poids par rapport au poids total du mélange réactionnel.

9. Utilisation de polyétheresterpolyols hydrophobes pouvant être obtenus par transformation, catalysée par une base, de composés de départ présentant des atomes d'hydrogène actifs selon Zerewitinoff avec des oxydes alkylène en présence d'esters d'acides gras, dans laquelle on utilise, pour la préparation des polyétheresterpolyols, des esters d'acides gras dont les radicaux acide gras ne présentent pas de groupes OH libres,
   pour la fabrication de matériaux composites de polyuréthane/polyisocyanurate, en particulier de composants composites à noyau.

**10.** Pale de rotor pour installations éoliennes, comprenant une structure stratifiée présentant les couches suivantes :

- un noyau et une couche fibreuse présentant du polyuréthane/polyisocyanurate, le cas échéant d'autres couches,

**caractérisé en ce que**
la couche fibreuse présentant du polyuréthane/polyisocyanurate est obtenu à l'aide d'un polyol hydrophobe, qui est un polyétheresterpolyol pouvant être obtenu par transformation, catalysée par une base, de composés de départ présentant des atomes d'hydrogène actifs selon Zerewitinoff avec des oxydes alkylène en présence d'esters d'acides gras, dans laquelle on utilise, pour la préparation du polyétheresterpolyol, des esters d'acides gras dont les radicaux acide gras ne présentent pas de groupes OH libres.

FIG. 1

FIG. 2

EP 3 161 046 B1

FIG.3

EP 3 161 046 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1310351 A1
- WO 2011081622 A1
- WO 2013057070 A1
- WO 2014089210 A1
- DE 102008027914 A1
- EP 1923417 A1
- EP 2177555 A1
- EP 1525244 A